(19) Europäisches Patentamt
European Patent Office
Office européen des brevets

(11) **EP 3 200 387 B1**

(12) **FASCICULE DE BREVET EUROPEEN**

(45) Date de publication et mention de la délivrance du brevet:
**10.06.2020 Bulletin 2020/24**

(51) Int Cl.:
***H04L 9/30*** *(2006.01)*

(21) Numéro de dépôt: **17153613.9**

(22) Date de dépôt: **27.01.2017**

(54) **PROCÉDÉ DE CALCUL SÉCURISÉ MULTIPARTITE PROTÉGÉ CONTRE UNE PARTIE MALVEILLANTE**

GESICHERTES MEHRPARTEIEN-BERECHNUNGSVERFAHREN, DAS GEGEN EINE PARTEI MIT BÖSEN ABSICHTEN GESCHÜTZT IST

SECURE MULTI-PARTY PROCESSING METHOD PROTECTED AGAINST A MALICIOUS PARTY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.01.2016 FR 1650694**

(43) Date de publication de la demande:
**02.08.2017 Bulletin 2017/31**

(73) Titulaire: **Idemia Identity & Security France 92400 Courbevoie (FR)**

(72) Inventeurs:
• **MOREL, Constance**
  **92130 ISSY LES MOULINEAUX (FR)**
• **BRINGER, Julien**
  **92130 ISSY LES MOULINEAUX (FR)**
• **CHABANNE, Hervé**
  **92130 ISSY LES MOULINEAUX (FR)**

(74) Mandataire: **Regimbeau**
  **20, rue de Chazelles**
  **75847 Paris Cedex 17 (FR)**

(56) Documents cités:
**FR-A1- 2 992 124**

• **JULIEN BRINGER ET AL: "GSHADE: Faster Privacy-Preserving Distance Computation and Biometric Identification", PROCEEDINGS OF THE 2ND ACM WORKSHOP ON INFORMATION HIDING AND MULTIMEDIA SECURITY, IH&MMSEC '14, 11 juin 2014 (2014-06-11), pages 187-198, XP055291441, New York, New York, USA DOI: 10.1145/2600918.2600922 ISBN: 978-1-4503-2647-6**
• **YAN HUANG ET AL: "Quid-Pro-Quo-tocols: Strengthening Semi-honest Protocols with Dual Execution", SECURITY AND PRIVACY (SP), 2012 IEEE SYMPOSIUM ON, IEEE, 20 mai 2012 (2012-05-20), pages 272-284, XP032456292, DOI: 10.1109/SP.2012.43 ISBN: 978-1-4673-1244-8**
• **MEHMET SABIR KIRAZ ET AL: "Security and Efficiency Analysis of The Hamming Distance Computation Protocol Based On Oblivious Transfer", INTERNATIONAL ASSOCIATION FOR CRYPTOLOGIC RESEARCH,, vol. 20150123:054459, 23 janvier 2015 (2015-01-23), pages 1-10, XP061017658,**

**Description**

DOMAINE DE L'INVENTION

L'invention concerne un procédé de traitement de données mis en oeuvre conjointement par deux parties, dans lequel une fonction de deux variables est évaluée de manière sécurisée par les deux parties, en ayant pour entrées des vecteurs détenus respectivement par chaque partie.

L'invention s'applique notamment à la protection de la confidentialité des vecteurs détenus par les parties, dans un contexte ou au moins l'une des parties est malicieuse, ou malveillante.

ETAT DE LA TECHNIQUE

On connaît du brevet FR 2 992 124 un procédé de calcul sécurisé multipartite d'une fonction de plusieurs variables, évalué en des données détenues respectivement par les différentes parties intervenant dans le calcul. Le terme « sécurisé » signifie qu'à l'issue du procédé de calcul de la fonction, le résultat est connu d'au moins l'une des parties, mais aucune partie n'a appris d'information sur les données détenues par la ou les autres parties.

Le procédé décrit dans ce brevet s'applique au calcul de fonctions F s'écrivant comme somme de sous-fonctions $f_i$ de deux variables : $F = \sum_{i=1}^{n} f_i$, et à valeurs dans l'ensemble $\mathbb{Z}_m$ des entiers compris entre 0 et m-1 où m est un nombre entier, n est un nombre entier positif correspondant au nombre de sous-fonctions, et i est un indice muet à valeurs de 1 à n.

Le procédé est par exemple applicable au calcul d'une distance de Hamming entre deux données biométriques X,Y comprenant chacune n composantes $x_i$, $y_i$ $X=(x_1,...x_n)$, $Y=(y_1,...,y_n)$, les données étant détenues par deux parties.

Le calcul de la fonction est mis en oeuvre comme suit.

Une première partie génère un ensemble de n valeurs aléatoires $r_i$ choisies dans l'ensemble $\mathbb{Z}_m$, et génère un ensemble comprenant les éléments $r_i + f_i(0, x_i)$ et $r_i + f_i(1, x_i)$, pour chaque i de 1 à n.

Les deux parties exécutent ensuite un protocole dit de « transfert inconscient » (également appelé oblivious transfer en anglais) pour que la deuxième partie récupère, pour chaque i de 1 à n, en fonction de la valeur des composantes $y_i$ de sa donnée Y, l'un des deux éléments générés par la première partie et qui correspond à $r_i + f_i(y_i, x_i)$.

De façon générale, un transfert inconscient est une opération de calcul entre deux parties $P_1$ et $P_2$. Dans ce type d'opération, $P_1$ dispose d'une liste de N éléments indexés où N est un nombre entier positif, et $P_2$ connaît le nombre N d'éléments de la liste et choisit un indice compris entre 0 et N-1. Par transfert inconscient, $P_2$ recupère le i[ème] élément de $P_1$, c'est-à-dire l'élément de $P_1$ indexé par i.

$P_1$ n'apprend aucune information sur l'indice de l'élément récupéré par $P_2$, et $P_2$ ne récupère aucune information sur les autres éléments de la liste détenus par $P_1$.

Il existe plusieurs protocoles de transfert inconscient, qui sont par exemple décrits dans les publications suivantes :

- Naor et al., Efficient oblivious transfer protocols, In Proceedings of the Twelfth Annual Symposium on Discrete Algorithms, January 7-9 2001, Washington, DC, USA, pages 448-457, 2001.
- Asharov et al., More efficient oblivious transfer and extensions for faster secure computation, In 2013 ACM SIGSAC Conference on Computer and Communications Security, CCS'13, Berlin, Germany, November 4-8 2013, pages 535-548, 2013.

Le transfert inconscient appliqué au protocole décrit ci-avant implique que la première partie n'apprend aucune information sur la composante $y_i$ de la deuxième partie, et la deuxième partie n'apprend aucune information sur $r_i + f_i(1 - y_i, x_i)$.

Ensuite, la deuxième partie somme les données qu'elle a obtenues pour chaque i et obtient un $T = \sum_i (r_i + f_i(y_i, x_i)) = R + F(X,Y)$. La première partie somme les valeurs aléatoires $r_i$ qu'elle a générées pour obtenir R.

Ensuite l'une des parties envoie son résultat à l'autre pour obtenir par un simple calcul la valeur de F(X,Y).

Pour évaluer la sécurité d'un procédé en cryptographie, on modélise le comportement des parties. En particulier, on définit un comportement « semi-honnête » et un comportement « malicieux » des parties au procédé.

Une partie semi-honnête est une partie qui, même si elle cherche à obtenir des informations sur les données détenues par l'autre partie, va suivre exactement les étapes du procédé. Une partie malicieuse est une partie qui ne respecte pas forcément les étapes du procédé, ceci afin de tenter d'obtenir des informations sur les données détenues par l'autre partie.

Par exemple, une partie malicieuse peut fausser les valeurs des $x_i$ dans les éléments $r_i+f_i(0,x_i)$ et $r_i+f_i(1,x_i)$.

Le procédé décrit ci-avant est sécurisé dans le cas d'une partie adverse semi-honnête si le protocole mis en oeuvre pour le transfert inconscient est lui-même sécurisé contre ce type d'adversaire. En effet, d'une part la première partie n'apprend rien sur les entrées de l'autre partie car elle joue le rôle de l'envoyeur dans le protocole de transfert inconscient et n'obtient donc aucune sortie. D'autre part, la deuxième partie reçoit $t_i= r_i + f_i(y_i,x_i)$ mais cela ne révèle aucune information sur les $f_i(y_i,x_i)$ car les $t_i$ et les $f_i(y_i,x_i)$ appartiennent à $\mathbb{Z}_m$ et $r_i$ choisi aléatoirement par l'autre partie dans $\mathbb{Z}_m$. Par conséquent, $t_i$ est uniformément aléatoire dans $\mathbb{Z}_m$ et ne révèle donc aucune information sur $f_i(y_i,x_i)$.

En revanche, dans le cas où la première partie est malicieuse, elle peut apprendre des informations sur la donnée détenue par l'autre partie, par exemple en modifiant la fonction calculée de sorte que $f(X,Y)=x_i$.

Par ailleurs, dans le cas où la deuxième partie est malicieuse, elle ne peut normalement pas obtenir d'informations sur la donnée détenue par la première partie grâce aux valeurs aléatoires $r_i$. Cependant si la sélection des valeurs $r_i$ n'est pas réellement aléatoire et que la deuxième partie parvient à obtenir des informations sur la façon dont les $r_i$ sont générés, alors il peut en déduire des informations sur la donnée détenue par la première partie.

Ainsi, dans le cas où les parties intervenant dans le calcul sont malicieuses, le procédé de calcul n'est pas sécurisé, même si le protocole de transfert inconscient l'est.

## PRESENTATION DE L'INVENTION

L'invention a pour but de remédier au problème présenté ci-avant.

En particulier, un but de l'invention est de proposer un procédé de calcul multipartite d'une fonction de données détenues par plusieurs parties qui soit sécurisé même dans le cas où les parties sont malicieuses.

Un autre but de l'invention est de proposer un procédé dont le temps d'exécution n'est pas considérablement accru par rapport à la version non sécurisée dans le cas de parties malicieuses.

Un autre but de l'invention est de proposer un procédé d'authentification d'un individu par calcul sécurisé multipartite même dans le cas où l'une des unités de traitement intervenant dans le procédé est malicieuse.

Le procédé proposé est sécurisé même dans le cas où les parties au calcul, c'est-à-dire les unités de traitement, sont malicieuses, en supposant que le protocole de transfert inconscient soit lui-même sécurisé.

En effet, en premier lieu le fait de proposer une exécution double de la série d'étapes du calcul de la fonction, en inversant les rôles entre les deux parties, permet que chaque partie obtienne une partie du résultat. Le test d'égalité permet ensuite de comparer si les deux résultats sont identiques sans révéler leurs valeurs afin de pouvoir arrêter le protocole sans révéler la sortie en cas de triche.

En second lieu, le procédé permet de se prémunir d'un cas où une partie malicieuse fausserait le résultat du test d'égalité ou le résultat de la fonction F(X,Y) en modifiant les valeurs des parties de résultat T et de R obtenues à l'issue d'une série d'étapes. En effet, le procédé comprend un double masquage qui comprend la génération aléatoire par chaque partie d'une donnée inversible qui protège ces valeurs de T et R. Il est ainsi beaucoup plus difficile, pour une partie malicieuse, de fausser le test d'égalité de F(X,Y) car elle ne connaît pas la valeur de la donnée inversible de l'autre partie et ne peut donc pas adapter ses valeurs de T, R, ou de sa deuxième donnée de masquage, pour tromper le test d'égalité.

Comme les deux séries d'étapes peuvent être exécutées en parallèle, ce procédé ne requiert qu'une augmentation très limitée du temps d'exécution par rapport à la version du procédé non sécurisée contre des parties malicieuses.

L'application du procédé présenté à des fonctions de types distance de Hamming, ou produit scalaire, sur des données d'identité d'individus telles que des données biométriques, permet une authentification sécurisée d'individus.

## DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

- La figure 1a représente un premier exemple d'exécution répétée d'une série d'étapes d'un procédé d'exécution d'un calcul cryptographique,
- La figure 1b représente un deuxième exemple d'exécution répétée d'une série d'étapes d'un procédé d'exécution d'un calcul cryptographique avec un masquage différent,
- La figure 2a représente un exemple de test d'égalité applicable à l'exemple d'exécution de la figure 1a,
- La figure 2b représente un exemple de test d'égalité applicable à l'exemple d'exécution de la figure 1b,
- La figure 3a représente schématiquement les principales étapes d'un exemple de procédé d'exécution d'un calcul cryptographique,

- La figure 3b représente schématiquement les principales étapes d'un exemple de procédé d'authentification,
- La figure 4 représente schématiquement un système de traitement de données adapté pour la mise en oeuvre du procédé, dans un exemple d'application à une authentification d'individu.

DESCRIPTION DETAILLEE D'AU MOINS UN MODE DE MISE EN ŒUVRE DE L'INVENTION

*Système de traitement de données*

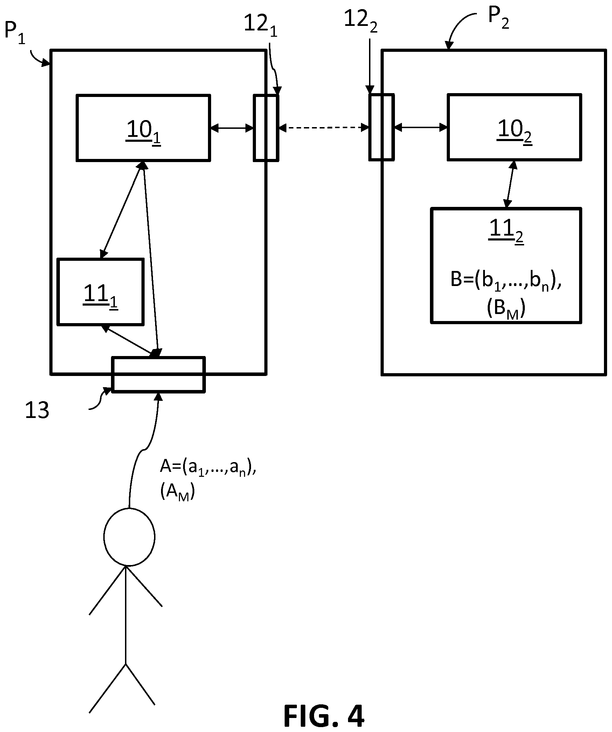

En référence à la figure 4, on a représenté deux parties $P_1$ et $P_2$ disposant respectivement d'un vecteur A et B, chaque vecteur comprenant un même nombre n de composantes indexées $(a_1,...,a_n)$, $(b_1,...,b_n)$.

Chaque vecteur est exprimé en base q, où q est un nombre entier strictement supérieur à 1, c'est-à-dire que les composantes $a_i$ et $b_i$ sont des entiers à valeurs comprises entre 0 et q-1. Les données A et B ne sont pas nécessairement exprimées dans la même base de sorte que A peut être en base q et B en base q' avec q' un entier strictement supérieur à 1 et différent de de q.

Selon un mode de réalisation particulier et non limitatif, chaque vecteur est binaire, et ses composantes sont à valeurs égales à 0 ou 1.

Les vecteurs A et B respectivement détenus par les parties $P_1$ et $P_2$ sont secrets, c'est-à-dire que le vecteur A n'est connu que de $P_1$ et le vecteur B n'est connu que de $P_2$.

Chaque partie est une unité de traitement, et dispose de moyens de traitement, par exemple un processeur $10_1, 10_2$, adapté pour mettre en oeuvre des calculs, et pour exécuter un programme comprenant des instructions de code installées sur le processeur. Chaque partie dispose également d'une mémoire $11_1$, $11_2$ et d'une interface de communication $12_1$, $12_2$ avec l'autre partie.

Les deux parties $P_1$ et $P_2$ peuvent s'engager dans un procédé d'exécution d'un calcul cryptographique comprenant le calcul d'une fonction F qui est obtenue par l'application à un ensemble de n sous-fonctions $f_i$ d'une même opération mathématique, dite première opération, où les sous-fonctions $f_i$ sont à plusieurs variables, n est un nombre entier positif correspondant au nombre de sous-fonctions dans la fonction f, et i est un indice muet à valeurs de 1 à n. On peut noter $F=f_1 op f_2 op ... op f_n$, où op est la première opération.

La première opération est par exemple une somme ou un produit, c'est-à-dire que la fonction F s'écrit respectivement soit comme une somme, soit comme un produit, des n sous-fonctions $f_i$. En particulier, chaque sous-fonction $f_i$ est une fonction de deux variables X et Y à n composantes $x_i$, $y_i$.

Dans le cas où F s'écrit comme une somme de sous-fonctions $f_i$, on note :

$$F(X,Y) = \sum_{i=1}^{n} f_i(x_i, Y) = \sum_{i=1}^{n} f_i(y_i, X)$$

avec $x_i, y_i$ les composantes entières des variables X et Y.

Dans le cas où F s'écrit comme un produit de sous-fonctions $f_i$, on note :

$$F(X,Y) = \prod_{i=1}^{n} f_i(x_i, Y) = \prod_{i=1}^{n} f_i(y_i, X)$$

avec $x_i, y_i$ les composantes entières des variables X et Y.

Le procédé s'applique dans ce cas de la même manière moyennant une prise en compte des différences de sous-fonctions et de nombre de composantes.

Cependant, dans la suite on prendra le cas simplifié ou les sous-fonctions sont identiques, et les nombres de composantes des données sont identiques aussi.

La fonction F peut également être une fraction dont le numérateur et le dénominateur sont chacun obtenus par l'application de la première opération à n sous-fonctions. Dans ce cas, et comme on le voit ci-après, le procédé est mis en oeuvre deux fois, une fois pour le calcul du numérateur, et une fois pour le calcul du dénominateur.

La fonction F est à valeurs dans l'ensemble $\mathbb{Z}_m$ des entiers compris entre 0 et m-1, où m est un nombre entier positif, et est en outre premier, pour des raisons explicitées ci-après. De plus, la fonction F est à valeurs dans le sous-ensemble de $\mathbb{Z}_m$ des éléments inversibles pour la première opération.

Ceci signifie que, dans le cas où la fonction F s'écrit comme un produit de n sous-fonctions $f_i$, cette fonction est à valeurs dans l'ensemble $\overset{\text{,}}{n} \quad d$ des entiers compris entre 1 et m-1, avec m également premier. En d'autres termes, les $f_i(x_i, Y)$ et les $f_i(y_i, X)$ sont avantageusement tous différents de 0. Ceci permet d'améliorer la sécurité du procédé pour les raisons détaillées ci-après.

Le procédé de traitement de données qui va être décrit ci-après peut notamment s'appliquer à un contexte d'authentification d'individus, notamment d'authentification biométrique, lorsque la fonction F s'écrit comme une somme des sous-fonctions $f_i$. Le système d'authentification de la figure 4 est représenté dans un tel contexte et à titre d'exemple non limitatif.

Un procédé d'authentification comprend une comparaison d'une donnée d'identité d'un individu candidat à une donnée d'un individu de référence pour détecter une correspondance entre les données et déterminer que l'individu est l'individu de référence.

Dans ce contexte, une partie $P_1$ peut être une unité de contrôle d'un individu candidat, comprenant par exemple un moyen d'acquisition 13 d'une donnée d'identité de l'individu. Cette donnée d'identité est avantageusement une donnée biométrique, c'est-à-dire une donnée numérique encodée sur un trait biométrique d'un individu. Les traits biométriques concernés peuvent typiquement comprendre des empreintes digitales, images d'iris, forme du visage, etc.

Dans ce cas, le moyen d'acquisition de donnée d'identité du serveur de contrôle est avantageusement un capteur de donnée biométrique (par exemple, mais non limitativement, un capteur d'empreinte digitale) ou un lecteur de document d'identité dans lequel une donnée biométrique a été préalablement enregistrée, par exemple en étant mémorisée dans une puce électronique intégrée au document ou en étant imprimée sur le document.

L'autre partie $P_2$ peut être une unité comprenant au moins une donnée d'identité d'un individu de référence, stockée par exemple dans sa mémoire $11_2$.

La fonction F peut alors être une fonction de comparaison de données d'identité d'individus, et en particulier peut être choisie parmi le groupe suivant :

- Distance de Hamming, définie par $F(X,Y) = \sum_{i=1}^{n} x_i \oplus y_i$,

- Distance de Hamming normalisée, définie par $F(X,Y) = \frac{\sum_{i=1}^{n}(m_i m'_i(x_i \oplus y_i))}{\sum_{i=1}^{n}(m_i m'_i)}$, où M=($m_1,...m_n$) et M'($m'_1,...,m'_n$) sont des vecteurs de masquage respectivement associés aux vecteurs X et Y, dont les bits à 1 indiquent les bits de même index des vecteurs X et Y à prendre en compte pour le calcul de la distance de Hamming, et

- Le produit scalaire, défini par $F(X,Y) = \sum_{i=1}^{n} x_i y_i$.

Lors d'un procédé d'authentification d'un individu, les parties $P_1$ et $P_2$ s'engagent dans le calcul de la fonction F choisie parmi ce groupe en suivant le procédé décrit ci-après pour évaluer un taux de similarité entre une donnée d'identité de l'individu et une donnée d'identité de l'individu de référence.

Si le taux de similarité est inférieur à un seuil prédéterminé, les données d'identité de l'individu candidat et de l'individu de référence sont considérées comme provenant de la même personne et l'individu candidat est authentifié.

*Procédé de traitement de données*

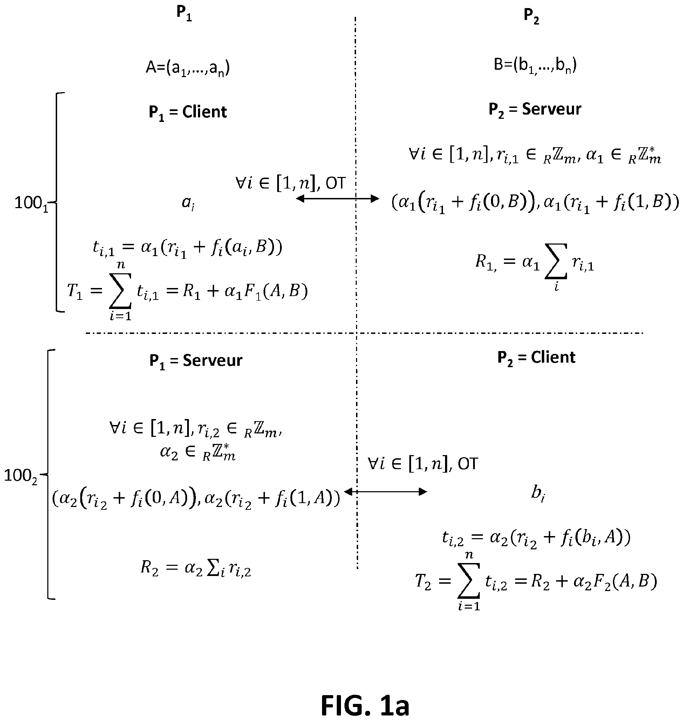

En référence aux figures 1a à 3a, on va décrire un procédé de calcul de la fonction F pouvant être mis en oeuvre par un système tel que présenté ci-avant, et qui permet qu'une des parties obtienne l'évaluation de la fonction F(A,B) avec pour entrées les vecteurs A et B détenues par les parties, sans qu'aucune partie n'obtienne d'informations sur le vecteur de l'autre partie, même si elle présente un comportement malicieux.

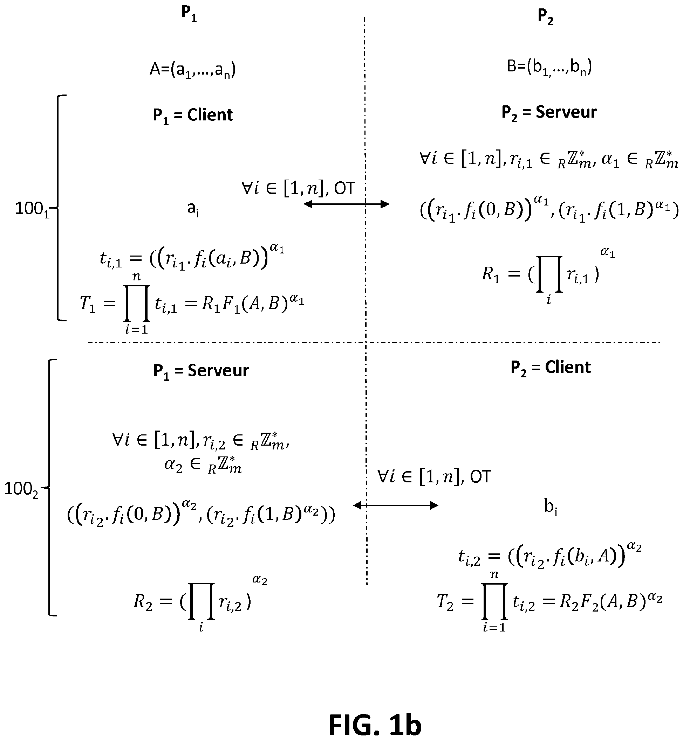

Pour ce faire, le procédé comprend une première phase 100, illustrée en figures 1a et 1b, comprenant la mise en oeuvre d'une série d'étapes déterminées $100_1$ dans laquelle la première partie $P_1$ a un rôle de client et la deuxième partie $P_2$ a un rôle de serveur, et la répétition de cette série d'étapes $100_2$ en inversant les rôles, c'est-à-dire que la première partie $P_1$ a un rôle de serveur et la deuxième partie $P_2$ a un rôle de client.

De préférence, mais non limitativement, la mise en oeuvre des deux séries d'étapes peut être réalisée simultanément par les deux parties, ceci afin de raccourcir la durée d'exécution du procédé. Alternativement, les séries d'étapes peuvent être mises en oeuvre successivement.

*Première phase du procédé*

Dans la suite, et par esprit de concision, on va décrire la série d'étapes par rapport aux rôles du serveur et du client sans détailler la première phase puis la deuxième phase, puisqu'elles sont symétriques.

On note X le vecteur détenu par la partie ayant le rôle de client et Y le vecteur détenu par la partie ayant le rôle de serveur. On comprend donc que lors de la mise en oeuvre de la première série d'étapes $100_1$, X=A et Y=B, et lors de la mise en oeuvre de la deuxième série d'étapes $100_2$, X=B et Y=A. On note également par les indices 1 et 2 les étapes mises en œuvre ou les données générées respectivement lors de la première ou la deuxième série d'étapes.

L'implémentation de chaque série d'étapes avec les notations propres à chaque partie et chaque mise en oeuvre de la série d'étapes est néanmoins détaillée sur les figures 1a et 1b.

Chaque série d'étapes $100_1$, $100_2$ comporte une première étape $110_1$, $110_2$ au cours de laquelle le serveur génère aléatoirement un ensemble de n premières données de masquage indexées $r_i$ dans l'ensemble $\mathbb{Z}_m$. Les données $r_i$ sont en outre choisies parmi les éléments inversibles dans l'ensemble $\mathbb{Z}_m$, pour la première opération.

En d'autres termes, si F est une somme des sous-fonctions $f_i$, alors les données $r_i$ sont inversibles pour l'addition, et elles sont donc choisies parmi l'ensemble $\mathbb{Z}_m$.

On note :

$$\forall i \in [1, n], r_i \in {}_R\mathbb{Z}_m$$

En revanche, si la fonction F Est un produit des sous-fonctions $f_i$, alors les données $r_i$ sont inversibles pour la multiplication, et elles sont donc choisies parmi l'ensemble $n$ d (soit $\mathbb{Z}_m$ privé de l'élément 0).

On note :

$$\forall i \in [1, n], r_i \in {}_R\mathbb{Z}_m^*$$

Le serveur génère également aléatoirement une deuxième donnée de masquage $\alpha$ inversible pour une deuxième opération, qui est différente de la première et distributive par rapport à celle-ci. Par exemple, si la première opération est l'addition, F est une somme de $f_i$, et la deuxième opération est avantageusement la multiplication. Si la première opération est la multiplication, F est un produit de $f_i$, la deuxième opération est avantageusement la mise à la puissance.

Dans ces deux exemples, la deuxième donnée de masquage $\alpha$ doit être inversible pour la multiplication dans l'ensemble $\mathbb{Z}_m$ (car les mêmes critères d'inversibilité s'appliquent pour la multiplication et la mise à la puissance). On note $\alpha \in {}_R\mathbb{Z}_m^*$.

Sur les figures 1a et 1b, on a en outre ajouté l'indice 1 ou 2 aux données $r_i$ et $\alpha$ pour indiquer que ces données sont générées respectivement lors de la première ou de la deuxième mise en oeuvre de la série d'étapes 100 et ne sont donc pas identiques (par exemple $\alpha_1 \neq \alpha_2$ et pour chaque i de 1 à n $r_{i1} \neq r_{i2}$). Les indices 1 et 2 sont néanmoins omis dans la plupart des notations ci-après pour ne pas alourdir le texte.

Le fait que m soit premier implique que tous les éléments de l'ensemble $\mathbb{Z}_m^*$ sont inversibles pour la multiplication. Par conséquent, lorsque la deuxième donnée $\alpha$ est choisie aléatoirement, on ne peut déduire aucune information sur la valeur de cette donnée.

Comme on l'a dit, dans le cas d'une fonction F sous la forme d'une fraction de fonctions, comme c'est le cas par exemple de la distance de Hamming normalisée (cas non représenté sur la figure 1a), alors à chaque implémentation de l'étape 100, des données $r_i$ et $\alpha$ sont générées pour le numérateur, et des données $r'_i$ et $\alpha'$ (présentant les mêmes propriétés que les données $r_i$ et $\alpha$) pour le dénominateur.

Lors d'une étape $120_1$, $120_2$, le serveur génère, à partir de ces données, et pour chaque sous-fonction $f_i$, c'est-à-dire pour tout i de 1 à n, un ensemble d'éléments, tel que chaque élément est formé par un résultat possible de la fonction $f_i$ évaluée en la donnée du client (qui lui est donc inconnue) et la donnée du serveur $f_i(x_j, Y)$, masquée par une première donnée de masquage $r_i$ et par la deuxième donnée de masquage $\alpha$.

Le masquage par la première donnée de masquage $r_i$ est mis en oeuvre en appliquant entre cette donnée et le résultat possible de la fonction $f_i$ la première opération, c'est-à-dire par exemple sommation ou multiplication, si F est obtenue respectivement par sommation ou multiplication des sous-fonctions $f_i$.

Dans le cas où F est une somme de $f_i$, chaque résultat possible de la fonction $f_i$ évaluée en la donnée du client et la donnée du serveur est additionné d'une première donnée de masquage $r_i$.

Dans le cas où F est un produit de $f_i$, chaque résultat possible de la fonction $f_i$ évaluée en la donnée du client et la donnée du serveur est multiplié par une première donnée de masquage $r_i$.

Le masquage par la deuxième donnée de masquage $\alpha$ est mis en œuvre par application, entre le résultat de la fonction $f_i$ masqué par une première donnée de masquage $r_i$ et la deuxième donnée de masquage $\alpha$, de la deuxième opération.

En particulier, dans le cas où la première opération est une sommation, chaque élément de l'ensemble généré par le serveur est un résultat possible de la fonction $f_i$ évaluée en la donnée du client et la donnée du serveur, additionné d'une première donnée de masquage $r_i$, et multiplié par la deuxième donnée de masquage $\alpha$ :

$$\alpha\left(r_i + f_i(x_i, Y)\right)$$

Par exemple, si la fonction est une somme de sous-fonctions $f_i$ à deux variables et que les données X et Y sont binaires, le serveur génère donc un doublet comme suit :

$$\left(\alpha\left(r_i + f_i(0, Y)\right), \alpha\left(r_i + f_i(1, Y)\right)\right)$$

Dans le cas où la première opération est une multiplication, la deuxième opération est une mise à la puissance à la deuxième donnée de masquage $\alpha$.

Alors, chaque élément de l'ensemble généré par le serveur est un résultat possible de la fonction $f_i$ évaluée en la donnée du client et la donnée du serveur, multiplié par une première donnée de masquage $r_i$, et mis à la puissance $\alpha$ :

$$\left(r_i.f_i(x_i, Y)\right)^{\alpha}$$

Par exemple, lorsque la fonction est un produit de sous-fonctions $f_i$ à deux variables, et que les données X et Y sont binaires, le serveur génère un doublet comme suit :

$$\left(\left(r_i.f_i(0, Y)\right)^{\alpha}, \left(r_i.f_i(1, Y)\right)^{\alpha}\right)$$

Lorsque la fonction F est une fraction, un ensemble conforme à la description qui précède est généré par le serveur pour le numérateur, et un autre pour le dénominateur.

Selon un exemple particulier, dans le cas où la fonction à évaluer est la distance de Hamming normalisée, chaque partie détient, en plus de sa donnée respective A, B, binaire une donnée de masquage respective de taille n, également binaire, et dont les bits à 1 indiquent respectivement les bits des vecteurs A et B à prendre en compte pour le calcul de la distance de Hamming. On note $M=(m_1,...m_n)$ la donnée de masquage détenue par l'unité ayant le rôle de serveur et $M'=(m'_1,...m'_n)$ la donnée de masquage détenue par l'unité ayant le rôle de client.

Sur la figure 4, on a indiqué par $A_M$ et $B_M$ les données de masquage correspondant respectivement aux vecteurs A et B. On a donc, lors de la première mise en oeuvre de la série d'étapes $100_1$, $A_M=M'$ et $B_M=M$, et lors de la seconde mise en oeuvre de la série d'étapes $100_2$, $A_M=M$ et $B_M=M'$.

Dans ce cas, on peut se ramener pour chaque partie à une donnée de longueur 2n en considérant qu'un bit de la donnée associée à un bit correspondant du masque à 0 est nul.

On pose ainsi X' une donnée obtenue à partir de X et M', de longueur 2n, et telle que $x'_i=x_i$ pour i =1 à n et $x'_i=m'_{i-n}$ pour i compris entre n+1 et 2n. La même chose s'applique mutatis mutandis pour obtenir Y' à partir de Y et M.

Lors de l'étape 120, le serveur génère, pour ce qui concerne le numérateur, pour tous les i de 1 à 2n, un ensemble de doublets :

$$\left(\alpha\left(r_i + f_i^{\,num}(0, Y')\right), \alpha\left(r_i + f_i^{\,num}(1, Y')\right)\right)$$

Où $f_i^{num}$ désigne le numérateur de la distance de Hamming normalisée, dont les valeurs sont détaillées au paragraphe 4.2 de la publication de J. Bringer et al., « GSHADE : Faster Privacy-Preserving Distance Computation and Biometric Identification », In Proceedings of the 2nd ACM workshop on Information hiding and multipedia security, 187-198, 2014.

Le serveur génère également, pour le dénominateur, pour tous les i de 1 à n, un ensemble de doublets :

$$(\alpha' r'_i, \alpha'(r'_i + m_i)).$$

Au cours de l'étape 120, le serveur génère ainsi une combinatoire des résultats possibles de la fonction F évaluée en la donnée du serveur et du client, en masquant les résultats par les $r_i$ et $\alpha_i$ (et les cas échéant $r'_i$ et $\alpha'_i$).

La série d'étapes comprend ensuite une étape $130_1$, $130_2$ lors de laquelle le client et le serveur s'engagent dans un protocole de transfert inconscient, où le client récupère, pour chaque i de 1 à n, l'un des éléments de l'ensemble généré par le serveur à l'étape 120, indexé de la valeur de $x_i$. Le type de transfert inconscient qui est utilisé pour cette étape est de préférence un protocole qui est sécurisé contre les parties malicieuses. C'est le cas des protocoles de transfert inconscient qui sont décrits dans ces deux publications :

- Asharov et al., More efficient oblivious transfer and extensions for faster secure computation, In 2013 ACM SIGSAC Conference on Computer and Communications Security, CCS'13, Berlin, Germany, November 4-8 2013, pages 535-548, 2013.
- Asharov et al., More efficient oblivious transfer extensions with security for malicious adversaries. In Advances in Cryptology - EUROCRYPT 2015 - 34th Annual International Conference on the Theory and Applications of Cryptographie Techniques, Sofia, Bulgaria, April 26-30 2015, Proceedings, Part I, pages 673-701, 2015

Le transfert inconscient est schématisé sur les figures 1a et 1b par le sigle « OT ». En particulier, dans le cas où le serveur a généré un doublet pour chaque i, si $x_i$ est égal à 0, le client récupère par un transfert inconscient de type 1 parmi 2 le premier élément du doublet, et si $x_i$ est égal à 1, il récupère le deuxième élément du doublet. Dans un cas plus général où la donnée du client est exprimée en base q, le serveur aura généré un q-uplet pour chaque i, et le client récupère par un transfert inconscient de type 1 parmi q l'élément du doublet correspondant à la valeur de $x_i$ entre 0 et q-1.

Ainsi le client peut récupérer une donnée $t_i$ nommée donnée intermédiaire. La donnée intermédiaire $t_i$ s'écrit, dans le cas où la fonction F est une somme de sous-fonctions $f_i$:

$$t_i = \alpha(r_i + f_i(x_i, Y))$$

Dans le cas où la fonction F est un produit de sous-fonctions $f_i$, elle s'écrit :

$$t_{i=}(r_i. f_i(x_i, Y))^{\alpha}$$

Dans l'exemple introduit précédemment où la fonction F est la distance de Hamming normalisée, le client récupère une donnée intermédiaire $t_i$ pour le numérateur, en fonction de la valeur de $x'_i$ tel que défini ci-avant, et une donnée intermédiaire $t'_i$ pour le dénominateur, en fonction de la valeur de $m'_i$.

Sur les figures 1a et 1b, on a également ajouté un indice 1 ou 2 aux données intermédiaires $t_i$ selon qu'elles sont obtenues lors de la première ou la deuxième implémentation de la phase 100.

Lors d'une étape $140_1$, $140_2$, le serveur génère à partir de toutes les premières données de masquage $r_i$ et de la deuxième donnée de masquage une première partie de résultat notée R.

Cette partie R est obtenue en appliquant la première opération - c'est-à-dire par exemple addition ou multiplication - à toutes les premières données de masquage, et en les masquant par la deuxième donnée $\alpha$, c'est-à-dire en leur appliquant la deuxième opération avec $\alpha$, par exemple respectivement en les multipliant par $\alpha$ ou les mettant à la puissance $\alpha$.

En résumé, dans le cas où la fonction F est une somme des sous-fonctions $f_i$, le serveur génère une partie de résultat R telle que :

$$R = \alpha \sum_i r_i$$

Dans le cas où la fonction F est un produit des sous-fonctions $f_i$, le serveur génère une partie de résultat R telle que :

$$R = (\prod_{i=1}^{n} r_i)^{\alpha}$$

Dans le cas du calcul d'une fonction sous forme de fraction, le serveur effectue cette opération pour le numérateur à partir des données $r_i$ et $\alpha$ pour obtenir une donnée R et pour le dénominateur à partir des données $r'_i$ et $\alpha'$ pour obtenir une donnée R'.

L'étape 140 peut être mise en oeuvre à n'importe quel moment après l'étape 110, et pas nécessairement après l'étape 130.

Bien entendu, et comme visible sur les figures 1a et 1b, une partie de résultat R (et le cas échéant R') est calculée lors de chaque implémentation de la phase 100. On note $R_1$ la partie de résultat calculée lors de la première implémentation de la phase 100, et $R_2$ la partie de résultat calculée lors de la deuxième implémentation de la phase 100. $R_1$ et $R_2$ sont différentes.

Lors d'une étape $150_1$, $150_2$, le client applique la première opération - c'est-à-dire par exemple addition ou multiplication - à toutes les données intermédiaires $t_i$ de manière à obtenir une partie de résultat T telle que :

- Si la fonction F est une somme de sous-fonctions $f_i$ :

$$T = \sum_{i=1}^{n} t_i = \sum_{i=1}^{n} \alpha\big(r_i + f_i(x_i, Y)\big) = R + \alpha F(X, Y)$$

- Si la fonction F est un produit de sous-fonctions $f_i$ :

$$T = \prod_{i=1}^{n} t_i = \prod_{i=1}^{n} \big(r_i . f_i(x_i, Y)\big)^{\alpha} = R . F(X, Y)^{\alpha}$$

Comme précédemment, une partie de résultat T est calculée lors de chaque implémentation de la phase 100, et sur les figures 1a et 1b on a noté respectivement $T_1$ et $T_2$ les parties de résultats obtenues respectivement lors de la première et la deuxième implémentation, $T_1$ et $T_2$ étant différentes.

Dans le cas où la fonction f est une fraction, cette étape est mise en oeuvre pour le numérateur (obtention d'une donnée T) et pour le dénominateur (obtention d'une donnée T') avec les données intermédiaires respectives.

En reprenant les indices 1 et 2 liés à la première ou deuxième implémentation de la phase 100, à l'issue de la première mise en oeuvre de la série d'étapes, la partie $P_1$ dans le rôle du client dispose d'une donnée $T_1$ et la partie $P_2$ dans le rôle du serveur dispose d'une donnée $R_1$ permettant ensemble d'obtenir une première évaluation de la fonction F en les données du client et du serveur, masquée par la deuxième donnée de masquage $\alpha_1$, qui a été générée aléatoirement par la partie $P_2$ en tant que serveur, et est donc inconnue de la partie $P_1$.

Dans le cas où F est une somme de sous-fonctions, on a

$$T_1 - R_1 = \alpha_1 F_1(X, Y)$$

Dans le cas où F est un produit de sous-fonctions, on a

$$T_1 . R_1^{-1} = F_1(X, Y)^{\alpha_1}$$

A l'issue de la deuxième mise en oeuvre de la série d'étapes $100_2$, la partie $P_1$ dans le rôle du serveur dispose d'une donnée $R_2$, et la partie $P_2$ dans le rôle du client dispose d'une donnée $T_2$ permettant d'obtenir une deuxième évaluation de la fonction F en les données du client et du serveur, masquée par la deuxième donnée de masquage $\alpha_2$, qui a été générée aléatoirement par la partie $P_1$ en tant que serveur, et est donc inconnue de la partie $P_2$.

Dans le cas où F est une somme de sous-fonctions, on a :

$$T_2 - R_2 = \alpha_2 F_2(X, Y)$$

Dans le cas où F est un produit de sous-fonctions, on a :

$$T_2 . R_2^{-1} = F_2(X,Y)^{\alpha_2}$$

Les résultats $F_1(X,Y)$ et $F_2(X,Y)$ sont égaux et valent $F(A,B)$ en l'absence de fraude.

Dans le cas où l'une des parties est malicieuse, par exemple $P_1$, elle ne peut donc pas, en modifiant les valeurs des données qu'elle détient, par exemple $T_1$, $R_2$ et $\alpha_2$, faire en sorte que :

$$\alpha_2(T_1 - R_1) = \alpha_2\alpha_1 F_1(X,Y) = \alpha_1(T_2 - R_2) = \alpha_1\alpha_2 F_2(X,Y)$$

Ou que :

$$(T_1 . R_1^{-1})^{\alpha_2} = F_1(X,Y)^{\alpha_1\alpha_2} = (T_2 . R_2^{-1})^{\alpha_1} = F_2(X,Y)^{\alpha_2\alpha_1}$$

De retour à l'étape 150, pour le cas de la distance de Hamming généralisée, le client somme séparément les données intermédiaires $t_i$ et $t'_i$ obtenues pour le numérateur et le dénominateur, pour obtenir (indices 1 et 2 omis) :

$$T = \sum_{i=1}^{n} t_i = R + \alpha||(X \oplus Y) \cap M \cap M'||$$

$$T' = \sum_{i=1}^{n} t'_i = R' + \alpha'||M \cap M'||$$

On obtient donc, à la suite des deux implémentations de la phase 100, les relations suivantes :

$$\alpha_1(\alpha'_1)^{-1} F_1(X,Y) = \frac{T_1 - R_1}{T'_1 - R'_1}$$

$$\alpha_2(\alpha'_2)^{-1} F_2(X,Y) = \frac{T_2 - R_2}{T'_2 - R'_2}$$

Comme précédemment, grâce à la multiplication lors de chaque série d'étapes par une valeur $\alpha_1$, $\alpha'_1$, $\alpha_2$ ou $\alpha'_2$ aléatoire et propre à une partie, une partie malicieuse, par exemple $P_1$, ne peut pas modifier les éléments qu'elle détient, soit $T_1$, $T'_1$, $R_2$, $R'_2$ et $\alpha_2$ et $\alpha'_2$, pour faire en sorte que :

$$\alpha_1(\alpha'_1)^{-1}\alpha_2(\alpha'_2)^{-1} F_2(X,Y) = \frac{\alpha_1}{\alpha'_1}\frac{T_2 - R_2}{T'_2 - R'_2} =$$

$$\alpha_1(\alpha'_1)^{-1}\alpha_2(\alpha'_2)^{-1} F_1(X,Y) = \frac{\alpha_2}{\alpha'_2}\frac{T_1 - R_1}{T'_1 - R'_1}$$

*Test d'égalité*

A l'issue de la phase 100, le procédé comprend un test d'égalité 200 des valeurs de $F_1(X,Y)$ et $F_2(X,Y)$ pouvant être déduites de chaque série d'étapes de la phase 100. Pour que ce test d'égalité 200 ne révèle pas d'information sur la valeur de $F(X,Y)$ avant d'avoir vérifié l'égalité, il comprend les deux étapes suivantes :

- Une première étape 210 consiste à «mettre en gage » ou réaliser un « commitment » de l'ensemble des sorties des deux séries d'étapes de la phase 100, à savoir $T_1$, $R_1$, $\alpha_1$, et $T_2$, $R_2$, $\alpha_2$.

Une mise en gage est une opération classique en cryptographie consistant à générer, à partir d'une donnée, d'une fonction de chiffrement et d'une clé, une valeur ne fournissant aucune information sur la donnée initiale. De plus, elle garantit que lors de l'opération de « désengagement » ou « decommitment », qui consiste à retrouver la donnée initiale à partir de la valeur, de la clé et d'une fonction de déchiffrement adaptée, la donnée initiale obtenue à l'issue du désengagement n'a pas été altérée. L'étape 210 permet donc d'assurer que, lors du test d'égalité, aucune sortie des séries d'étapes de la phase 100 n'est altérée.

- Une deuxième étape 220 est une vérification de l'égalité des valeurs de $F_1(X,Y)$ et $F_2(X,Y)$ sans qu'une partie n'obtienne d'information sur le résultat $F(X,Y)$.

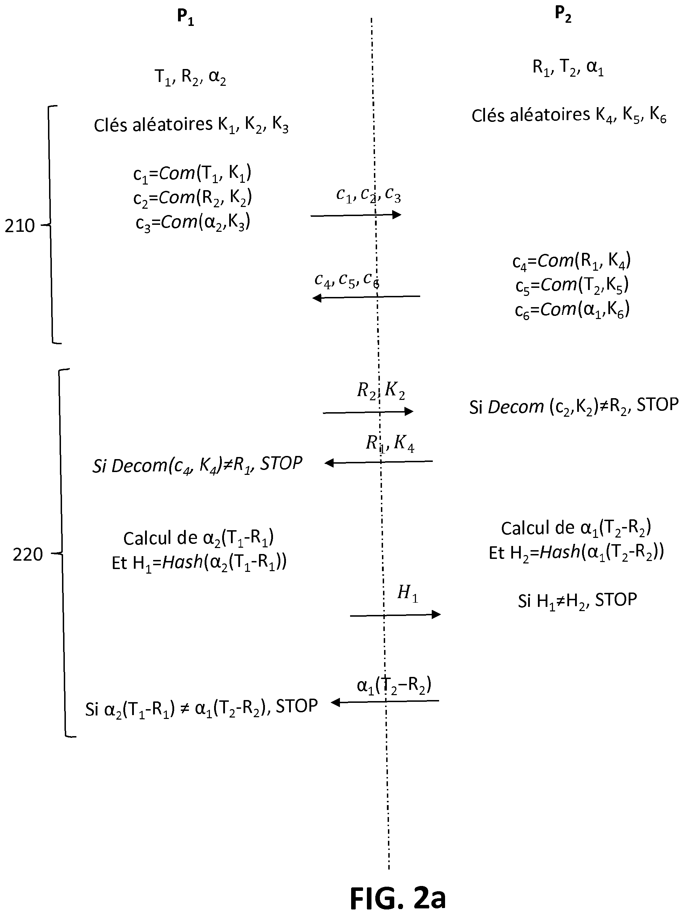

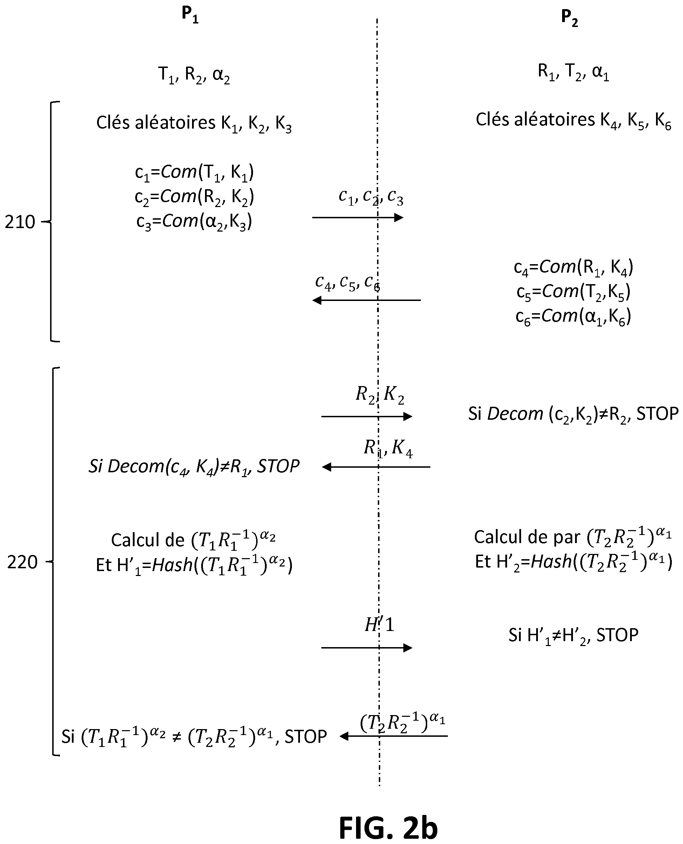

A titre d'exemple non limitatif, on décrit ci-après et en référence à la figure 2 un protocole de test d'égalité possible pour cette phase 200.

Lors de ce protocole, la partie $P_1$ a pour entrées les données $T_1$, $R_2$ et $\alpha_2$ et la partie $P_2$ a pour entrées les données $R_1$, $T_2$ et $\alpha_1$ issues de la première phase 100.

Le protocole comprend une première étape de mise en gage 210 au cours de laquelle la partie $P_1$ met en gage, au moyen de clés aléatoires $K_1$, $K_2$, $K_3$ respectivement ses données $T_1$, $R_2$ et $\alpha_2$ pour obtenir trois jetons $c_1$, $c_2$, $c_3$ définis respectivement par :

$$c_1 = Com(T_1, K_1)$$

$$c_2 = Com(R_2, K_2)$$

$$c_3 = Com(\alpha_2, K_3)$$

La partie $P_1$ envoie les jetons à la partie $P_2$. Dans le cas où la fonction calculée est la distance de Hamming généralisée, les données $T'_1$, $R'_2$ et $\alpha'_2$ sont mises en gage avec d'autres clés aléatoires, et les jetons obtenus sont aussi envoyés à l'autre partie.

De son côté, la partie $P_2$ met en gage, au moyen de clés aléatoires $K_4$, $K_5$, $K_6$, respectivement ses données $R_1$, $T_2$ et $\alpha_1$ pour obtenir trois jetons $c_4$, $c_5$, $c_6$ définis respectivement par :

$$c_4 = Com(R_1, K_4)$$

$$c_5 = Com(T_2, K_5)$$

$$c_6 = Com(\alpha_1, K_6)$$

La partie $P_2$ envoie les jetons à la partie $P_1$. Dans le cas où la fonction calculée est la distance de Hamming généralisée, les données $T'_2$, $R'_1$ et $\alpha'_1$ sont mises en gage avec d'autres clés aléatoires, et les jetons obtenus sont aussi envoyés à la première partie $P_1$.

L'étape 220 de vérification de l'égalité des valeurs de $F_1(X,Y)$ et $F_2(X,Y)$ obtenues lors de la phase 1 peut ensuite être mise en oeuvre comme suit, selon un exemple non limitatif.

La première partie $P_1$ envoie à la deuxième partie $P_2$ la donnée $R_2$ et la clé $K_2$. La partie $P_2$ peut donc réaliser le désengagement de la donnée $R_2$, $Decom(c_2, K_2)$, et vérifier qu'elle correspond à la donnée transmise, et donc que la partie $P_1$ ne l'a pas modifiée. S'il existe une différence entre la donnée $R_2$ transmise par $P_1$ et son désengagement à partir de $K_2$, le protocole s'arrête, une fraude est détectée.

Ensuite, la deuxième partie $P_2$ envoie à la première partie $P_1$ la donnée $R_1$ et la clé $K_4$. La partie $P_1$ peut réaliser le désengagement de la donnée $R_1$, $Decom(c_4, K_4)$, et vérifier qu'elle correspond à la donnée transmise. S'il existe une différence entre la donnée $R_1$ transmise par $P_2$ et son désengagement à partir de $K_4$, le protocole s'arrête, une fraude est détectée.

Dans le cas d'une fonction F sous forme de fraction de fonctions, la vérification de l'égalité est réalisée en vérifiant séparément l'égalité des numérateurs et des dénominateurs.

Sur la figure 2a, dans le cas où la fonction F est une somme de sous-fonctions $f_i$, la partie $P_1$ et la partie $P_2$ sont alors en mesure de calculer respectivement les valeurs $\alpha_1\alpha_2F_1(X,Y)$ et $\alpha_1\alpha_2F_2(X,Y)$ (par $\alpha_2(T_1-R_1)$ et $\alpha_1(T_2-R_2)$).

On note $H_1 = Hash(\alpha_1\alpha_2F_1(X,Y))$ et $H_2 = Hash(\alpha_1\alpha_2F_2(X,Y))$ où *Hash* est une fonction de hachage.

Une partie envoie d'abord l'un de $H_1$ ou $H_2$ à l'autre partie, qui compare l'un de $H_1$ ou $H_2$ reçu à l'autre qu'elle détenait auparavant. Si H1≠H2, la partie ayant effectué la comparaison arrête le protocole. Sinon, cette partie ne disposant que de hachés elle ne peut pas en déduire la valeur de la fonction F évaluée en X et Y.

Alors cette partie envoie à l'autre celui qu'elle détient parmi $\alpha_1\alpha_2F_2(X,Y)$ et $\alpha_1\alpha_2F_1(X,Y)$. La partie ayant reçu par exemple $\alpha_1\alpha_2F_2(X,Y)$ le compare à $\alpha_1\alpha_2F_1(X,Y)$ qu'elle détenait déjà (ou vice-versa) pour vérifier l'égalité entre les deux termes. Si ce n'est pas le cas, la partie arrête le protocole.

Sinon, les deux parties ont pu vérifier si $F_1(X,Y)=F_2(X,Y)$ tout en s'assurant que l'autre partie n'a pas altéré l'intégrité des données.

Sur la figure 2b, dans le cas où la fonction F est un produit de sous-fonctions $f_i$, la partie $P_1$ et la partie $P_2$ sont en mesure de calculer $(F_1(X,Y))^{\alpha_1\alpha_2}$ et $(F_2(X,Y))^{\alpha_1\alpha_2}$ (par $(T_1R_1^{-1})^{\alpha_2}$ et $(T_2R_2^{-1})^{\alpha_1}$ )

On note $H'_1 = Hash((F_1(X,Y))^{\alpha_1\alpha_2})$ et $H'_2 = Hash((F_2(X,Y))^{\alpha_1\alpha_2})$ où *Hash* est une fonction de hashage.

Une partie envoie l'un de $H'_1$ ou $H'_2$ à l'autre partie, qui compare $H'_1$ et $H'_2$, et arrête le protocole s'il existe une différence.

Sinon, elle renvoie ensuite à l'autre partie l'un de $(F_2(X,Y))^{\alpha_1\alpha_2}$ et $(F_1(X,Y))^{\alpha_1\alpha_2}$.

La partie possédant $(F_2(X,Y))^{\alpha_1\alpha_2}$ et $(F_1(X,Y))^{\alpha_1\alpha_2}$ les compare, et s'il existe une différence, elle arrête le protocole. Ainsi les deux parties peuvent vérifier si $F_1(X,Y)=F_2(X,Y)$ tout en garantissant l'intégrité des données.

Si une partie constate que $F_1(X,Y)\neq F_2(X,Y)$, alors le protocole s'arrête, et une fraude est détectée.

A l'issue du test d'égalité, si l'égalité des valeurs de $F_1(X,Y)$ et $F_2(X,Y)$ a été vérifiée et confirmée, alors l'une des deux parties peut calculer F(X,Y) lors d'une étape 300.

Par exemple, une partie peut soit utiliser sa donnée $T_1$ (resp $T_2$) et récupérer $R_1$ (resp $R_2$) et $\alpha_1$ (resp $\alpha_2$) auprès de l'autre partie, soit utiliser ses données $R_1$ (resp $R_2$) et $\alpha_1$ (resp $\alpha_2$) et récupérer la donnée $T_1$ (resp $T_2$) détenue par l'autre partie, pour déduire F(A,B).

Selon une variante avantageuse en termes de sécurité, la partie peut utiliser une donnée de l'autre partie qu'elle a déjà reçue lors du procédé (en l'occurrence, $R_1$ ou $R_2$), et utiliser également les deux autres paramètres $T_1$, $\alpha_1$ ou $T_2$, $\alpha_2$ détenus par l'autre partie et qu'elle n'a pas récupérés.

En effet, la partie peut également récupérer les jetons de mise en gage des paramètres correspondants et vérifier l'intégrité à partir des jetons.

La déduction de F(A,B) se fait, quand F est une somme de sous-fonctions, par l'opération :

$$F(A,B) = a_1^{-1}(T_1 - R_1)$$

Ou

$$F(A,B) = a_2^{-1}(T_2 - R_2)$$

La déduction de F(A,B) se fait, quand F est un produit de sous-fonctions, par l'opération :

$$F(A,B) = (T_1R_1^{-1})^{\frac{1}{a_1}}$$

ou

$$F(A,B) = (T_2R_2^{-1})^{\frac{1}{a_2}}$$

Dans le cas où la fonction calculée est une fraction de fonctions, le calcul de F(A,B) est réalisé en calculant d'abord le numérateur, puis le dénominateur de la fonction.

Le résultat de la fonction évaluée en A et B est donc détenu par l'une des parties sans qu'aucune partie n'ait révélé d'information à l'autre partie sur la donnée qu'elle détient.

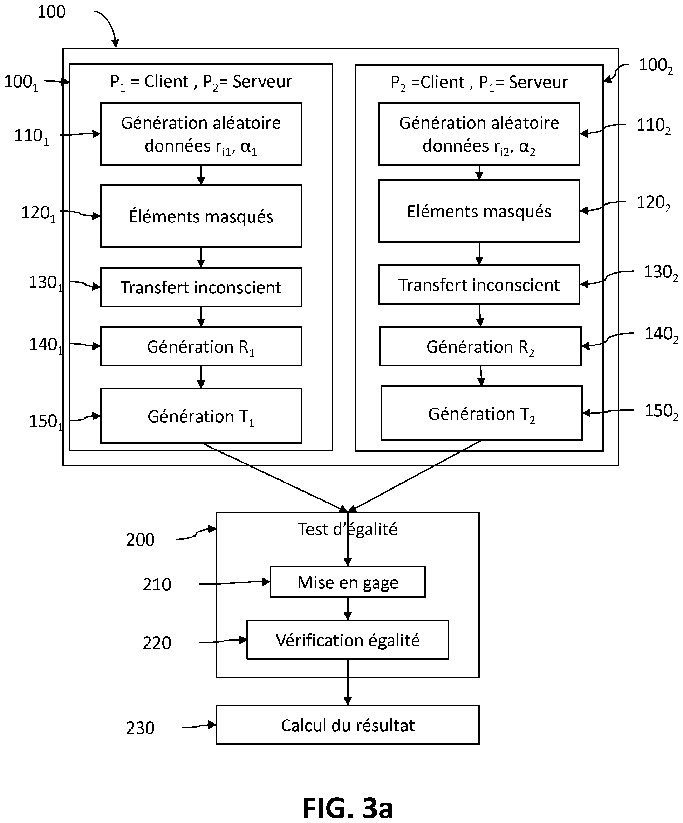

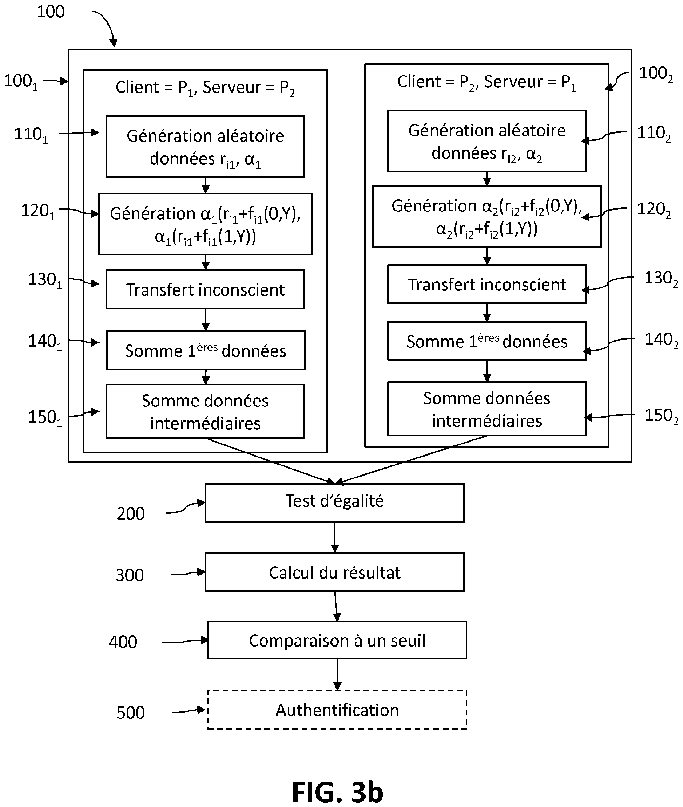

Sur la figure 3b, dans le cas où le calcul de la fonction F est mis en oeuvre lors d'un procédé d'authentification d'un individu, le résultat F(A,B) peut être comparé à un seuil prédéterminé lors d'une étape 400. Par exemple, dans le cas où la fonction est une distance de Hamming, le résultat doit être inférieur à un seuil déterminé pour que les données soient considérées comme provenant de la même personne.

Si le résultat de la comparaison indique que les données A et B proviennent de la même personne, l'individu est authentifié comme l'individu de référence lors d'une étape 500. Sinon, des mesures d'avertissement peuvent être mises en oeuvre par l'une des parties, par exemples au moyen par exemple de l'affichage d'un message, de la génération d'une alerte sonore, etc.

**Revendications**

1. Procédé d'exécution d'un calcul cryptographique mis en oeuvre par deux unités de traitement ($P_1$,$P_2$) comprenant chacune des moyens de traitement, et possédant respectivement un vecteur A et un vecteur B comprenant un nombre n de composantes indexées, le procédé comprenant l'évaluation sécurisée d'une fonction F obtenue par l'application à n sous-fonctions $f_i$ de deux variables d'une opération dite première opération, avec les vecteurs de chaque unité de traitement comme entrées de la fonction,
   le procédé étant **caractérisé en ce qu'**il comprend :

   - la mise en oeuvre d'une série d'étapes ($100_1$) de calcul sécurisé dans lequel une unité de traitement prend un rôle de client et l'autre unité de traitement prend un rôle de serveur, et
   - la répétition de la série d'étapes ($100_2$) de calcul sécurisé dans laquelle les rôles de client et de serveur sont échangés entre les deux unités de traitement,
   chaque série d'étapes (100) comprenant :

     a) génération aléatoire (110), par le serveur, de n premières données de masquage ($r_i$), dans l'ensemble $\mathbb{Z}_m$ avec m premier, inversibles pour la première opération, et d'une deuxième donnée de masquage ($\alpha$) dans l'ensemble $\mathbb{Z}_m$, inversible pour une deuxième opération, différente de la première opération, et distributive par rapport à celle-ci,
     b) pour chaque sous-fonction $f_i$, génération (120) par le serveur d'un ensemble d'éléments, chaque élément étant formé par :

       ◦ un résultat de la sous-fonction $f_i$ évaluée en le vecteur du serveur et en une valeur possible d'une composante du vecteur possédé par le client,
       ◦ masqué par une première donnée de masquage ($r_i$), le masquage étant obtenu par application de la première opération entre le résultat et la première donnée de masquage, et
       ◦ masqué par la deuxième donnée de masquage ($\alpha$), le masquage étant mis en oeuvre par application entre le résultat masqué par la première donnée de masquage et la deuxième donnée de masquage de la deuxième opération,

     c) récupération par transfert inconscient (130), par le client, pour chaque composante du vecteur possédé par le client, d'une donnée intermédiaire correspondant à l'un des éléments générés par le serveur et indexé par la valeur de ladite composante,
     d) génération (140), par le serveur, d'une première partie de résultat (R), par :

       • le masquage de chaque première donnée de masquage ($r_i$) par application de la deuxième opération entre chaque première donnée de masquage ($r_i$) et la deuxième donnée de masquage ($\alpha$), de sorte à obtenir des premières données masquées, et
       • l'application entre toutes lesdites premières données masquées de la première opération, et

     e) génération (150), par le client, d'une deuxième partie de résultat (T), par application entre toutes les données intermédiaires de la première opération, ladite deuxième partie de résultat correspondant à l' évaluation masquée de la fonction F avec les vecteurs des deux unités de traitement comme entrées,

   - la mise en oeuvre, par les deux unités de traitement, d'un test d'égalité (200) sur les évaluations masquées de la fonction F obtenues à l'issue de chaque série d'étapes, sans que l'une des unités de traitement n'obtienne d'information sur le résultat F(A,B), le test d'égalité (200) comprenant la mise en gage des première et deuxième parties de résultat et de la deuxième de donnée de masquage de chaque séries d'étapes et

- si le test d'égalité est satisfait, les étapes, effectuées par l'une des deux unités de traitement, de : 1) calcul (300) de la fonction évaluée avec les données des deux unités de traitement F(A,B) à partir des premières et deuxièmes parties de résultat, et
- 2) d'utilisation de la fonction évaluée avec les données des deux unités de traitement dans au moins une application parmi le groupe comprenant une application cryptographique, une application d'identification, et une application d'authentification.

2. Procédé selon la revendication 1, dans lequel la mise en oeuvre des deux séries d'étapes est réalisée simultanément.

3. Procédé selon l'une des revendications précédentes, dans lequel l'étape de calcul (300) par l'une des deux unités de traitement de F(A,B) comprend l'obtention de la partie de résultat détenue par l'autre unité de traitement, et la déduction de F(A,B) à partir des deux parties de résultat.

4. Procédé selon l'une des revendications précédentes, dans lequel les étapes de mise en oeuvre et de répétition de la série d'étapes sont effectuées une fois pour le numérateur d'une fraction de fonctions et une fois pour le dénominateur de la fraction de fonctions.

5. Procédé selon l'une des revendications précédentes, dans lequel la première opération est une addition ou une multiplication, et la deuxième opération est respectivement une multiplication ou une mise à la puissance.

6. Procédé selon la revendication 5, dans lequel la fonction F est une somme des n sous-fonctions $f_i$, et la mise en oeuvre de chaque série d'étapes comprend :

- lors de l'étape b), chaque élément est formé par la somme d'un résultat possible de la sous-fonction $f_i$ évaluée en la donnée du client et la donnée du serveur et d'une première donnée de masquage, et multipliée par la deuxième donnée de masquage,
- lors de l'étape d), la première partie du résultat est générée par le serveur par sommation de toutes les premières données de masquage et multiplication par la deuxième donnée de masquage, et
- lors de l'étape e), la deuxième partie du résultat est générée par le client par sommation de toutes les données intermédiaires.

7. Procédé selon l'une des revendications 5 ou 6, dans lequel la fonction à évaluer est l'une parmi le groupe suivant :

- distance de Hamming entre les vecteurs des parties,
- le numérateur ou le dénominateur d'une fraction de fonctions représentant la distance de Hamming normalisée entre les vecteurs des parties,
- produit scalaire entre les vecteurs des parties.

8. Procédé selon la revendication 7, dans lequel les vecteurs des unités de traitement sont des données d'identité d'individus, et l'utilisation de la fonction évaluée comprend :

- la comparaison (400) à un seuil préétabli en fonction de la nature de la fonction évaluée, et
- à partir du résultat de ladite comparaison, la détermination (500) du fait que les données d'identité correspondent ou non à un même individu.

9. Procédé selon la revendication 8, dans lequel les données d'identité d'individus sont des données encodées sur des traits biométriques d'individus.

10. Procédé selon l'une des revendications 7 à 9, dans lequel les composantes des données détenues par les unités de traitement sont des entiers compris entre 0 et q-1, et :

- l'étape b) comprend la génération par le serveur d'un ensemble comprenant les éléments :

$$(\alpha(r_i + f_i(0, y_i)), \ldots, \alpha(r_i + f_i(q - 1, y_i)))$$

où $y_i$ est une composante du vecteur possédé par le serveur, et

- la donnée intermédiaire récupérée lors de l'étape c) est :

$$\big(\alpha(r_i + f_i(x_i, y_i))\big)$$

**11.** Procédé selon l'une des revendications 1 à 5, dans lequel la fonction à évaluer est un produit des n sous-fonctions $f_i$, et la mise en œuvre de chaque série d'étapes comprend :

- lors de l'étape b), chaque élément est formé par le produit d'un résultat possible de la sous-fonction $f_i$ évaluée en la donnée du client et la donnée du serveur et d'une première donnée de masquage, et mise à la puissance de la deuxième donnée de masquage,
- lors de l'étape d), la première partie du résultat est générée par le serveur par produit de toutes les premières données de masquage et mise à la puissance à la deuxième donnée de masquage, et
- lors de l'étape e), la deuxième partie du résultat est générée par le client par produit de toutes les données intermédiaires.

**12.** Procédé selon la revendication 11, dans lequel
les composantes des données détenues par les unités de traitement sont des entiers compris entre 0 et q-1, et :

- l'étape b) comprend la génération par le serveur d'un ensemble comprenant les éléments :

$$\big((r_i \cdot f_i(0, y_i))^\alpha, \ldots, (r_i \cdot f_i(q-1, y_i))^\alpha\big)$$

où $y_i$ est une composante du vecteur possédé par le serveur, et
- la donnée intermédiaire récupérée lors de l'étape c) est :

$$(r_i \cdot f_i(x_i, y_i))^\alpha$$

**13.** Produit programme d'ordinateur, comprenant des instructions de code qui, exécutées par deux unités de traitement, conduisent les deux entités à mettre en oeuvre un procédé selon l'une des revendications précédentes.

**14.** Système d'authentification d'un individu, comprenant une première unité de traitement et une deuxième unité de traitement, chaque unité de traitement comprenant un processeur (10) et une interface de communication (12), le système étant **caractérisé en ce que** la première et la deuxième unité de traitement sont adaptées pour mettre en oeuvre le procédé de traitement de données selon l'une des revendications 8 ou 9.

**Patentansprüche**

**1.** Verfahren zur Ausführung einer kryptografischen Berechnung, durchgeführt von zwei Verarbeitungseinheiten ($P_1$, $P_2$), die jede Verarbeitungsmittel umfassen, und jeweils einen Vektor A und einen Vektor B besitzen, umfassend eine Anzahl n indexierter Komponenten,
wobei das Verfahren die abgesicherte Evaluierung einer Funktion F umfasst, erhalten durch die Anwendung auf n Unterfunktionen $f_i$ von zwei Variablen einer als erste Operation bezeichneten Operation, mit den Vektoren jeder Verarbeitungseinheit als Einträge der Funktion,
wobei das Verfahren **dadurch gekennzeichnet ist, dass** es umfasst:

- das Durchführen einer abgesicherten Reihe von Rechenschritten ($100_1$), wobei eine Verarbeitungseinheit die Aufgabe als Client übernimmt und die andere Verarbeitungseinheit eine Aufgabe als Server übernimmt, und
- das Wiederholen der abgesicherten Reihe von Rechenschritten ($100_2$), wobei die Client- und Serveraufgaben zwischen den zwei Verarbeitungseinheiten getauscht werden,
wobei jede Reihe von Schritten (100) umfasst:

a) das zufällige Generieren (110), durch den Server, von n ersten Maskendaten ($r_i$), in der Einheit $\mathbb{Z}_m$ mit m zuerst, die für die erste Operation umkehrbar sind, und einer zweiten Maskenangabe ($\alpha$) in der

Einheit $\mathbb{Z}_m$ , die für eine zweite Operation, die sich von der ersten Operation unterscheidet, umkehrbar und in Bezug auf diese distributiv ist,

b) für jede Unterfunktion $f_i$, Generieren (120), durch den Server, einer Einheit von Elementen, wobei jedes Element gebildet ist von:

○ einem Ergebnis der Unterfunktion $f_i$, evaluiert in dem Vektor des Servers und in einem möglichen Wert einer Komponente des Vektors, den der Client besitzt,

o maskiert durch eine erste Maskenangabe ($r_i$), wobei die Maskierung durch Anwendung der ersten Operation zwischen dem Ergebnis und der ersten Maskenangabe erhalten wird, und

o maskiert durch die zweite Maskenangabe ($\alpha$), wobei die Maskierung durch Anwendung zwischen dem durch die erste Maskenangabe maskierten Ergebnis und der zweiten Maskenangabe der zweiten Operation durchgeführt wird,

c) Rückgewinnen, durch Oblivious Transfer (130), durch den Client, für jede Komponente des Vektors, den der Client besitzt, einer Übergangsangabe, die einem der von dem Server generierten Elemente entspricht und indexiert durch den Wert der Komponente,

d) Generieren (140), durch den Server, eines ersten Ergebnisteils (R) durch:

• die Maskierung jeder ersten Maskenangabe ($r_i$) durch Anwendung der zweiten Operation zwischen jeder ersten Maskenangabe ($r_i$) und der zweiten Maskenangabe ($\alpha$) derart, dass erste maskierte Daten erhalten werden, und

• die Anwendung, zwischen allen ersten maskierten Daten, der ersten Operation, und

e) Generieren (150), durch den Client, eines zweiten Ergebnisteils (T) durch Anwendung zwischen allen Übergangsdaten der ersten Operation, wobei der zweite Ergebnisteil der maskierten Evaluierung der Funktion F mit den Vektoren der zwei Verarbeitungseinheiten als Einträge entspricht,

- das Durchführen, durch die zwei Verarbeitungseinheiten, eines Gleichheitstests (200) für die maskierten Evaluierungen der Funktion F, erhalten am Ende jeder Schrittreihe, ohne dass eine der Verarbeitungseinheiten eine Information über das Ergebnis F(A,B) erhält, wobei der Gleichheitstest (200) den Einsatz des ersten und zweiten Ergebnisteils und der zweiten Maskenangabe jeder Schrittreihe umfasst, und

- wenn der Gleichheitstests bestanden ist, die Schritte, durchgeführt von einer der zwei Verarbeitungseinheiten:

1) Berechnen (300) der mit den Daten der zwei Verarbeitungseinheiten F(A,B) evaluierten Funktion auf der Basis der ersten und zweiten Ergebnisteile, und

2) Verwenden der mit den Daten der zwei Verarbeitungseinheiten evaluierten Funktion in mindestens einer Anwendung der Gruppe, umfassend eine kryptographische Anwendung, eine Identifikationsanwendung und eine Authentifizierungsanwendung.

2. Verfahren nach Anspruch 1, wobei die Durchführung der zwei Schrittreihen gleichzeitig erfolgt.

3. Verfahren nach einem der vorangehenden Ansprüche, wobei der Schritt des Berechnens (300) durch eine der zwei Verarbeitungseinheiten von F(A,B) das Erhalten des Ergebnisteils, über den die andere Verarbeitungseinheit verfügt, und die Ableitung von F(A,B) auf der Basis der zwei Ergebnisteile umfasst.

4. Verfahren nach einem der vorangehenden Ansprüche, wobei die Schritte des Durchführens und des Wiederholens der Reihe von Schritten einmal für den Zähler eines Bruchteils von Funktionen und einmal für den Nenner des Bruchteils von Funktionen durchgeführt werden.

5. Verfahren nach einem der vorangehenden Ansprüche, wobei die erste Operation eine Addition oder eine Multiplikation ist und die zweite Operation jeweils eine Multiplikation oder eine Potenzierung ist.

6. Verfahren nach Anspruch 5, wobei die Funktion F eine Summe der n Unterfunktionen $f_i$, ist und die Durchführung jeder Schrittreihe umfasst:

- bei Schritt b) wird jedes Element durch die Summe eines möglichen Ergebnisses der Unterfunktion $f_i$, evaluiert in der Angabe des Clients und der Angabe des Servers, und einer ersten Maskenangabe, und multipliziert mit der zweiten Maskenangabe, gebildet
- bei Schritt d) wird der erste Teil des Ergebnisses durch den Server durch Summieren aller ersten Maskendaten und Multizieren mit der zweiten Maskenangabe generiert, und
- bei Schritt e) wird der zweite Teil des Ergebnisses durch den Client durch Summieren aller Übergangsdaten generiert.

7. Verfahren nach einem der Ansprüche 5 oder 6, wobei die zu evaluierende Funktion eine aus der folgenden Gruppe ist:

- Hamming-Distanz zwischen den Vektoren der Teile,
- der Zähler oder der Nenner eines Bruchteils von Funktionen, der die normalisierte Hamming-Distanz zwischen den Vektoren der Teile darstellt,
- Skalarprodukt zwischen den Vektoren der Teile.

8. Verfahren nach Anspruch 7, wobei die Vektoren der Verarbeitungseinheiten Identitätsdaten von Individuen sind, und die Verwendung der evaluierten Funktion umfasst:

- den Vergleich (400) mit einem vorher festgelegten Grenzwert in Abhängigkeit von der Art der evaluierten Funktion, und
- auf der Basis des Ergebnisses des Vergleichs, die Ermittlung (500) des Fakts, dass die Identitätsdaten demselben Individuum entsprechen oder nicht.

9. Verfahren nach Anspruch 8, wobei die Identitätsdaten von Individuen anhand biometrischer Linien codierte Daten sind.

10. Verfahren nach einem der Ansprüche 7 bis 9, wobei die Komponenten der Daten, über die die Verarbeitungseinheiten verfügen, Ganzzahlen sind, die zwischen 0 und q-1 liegen, und:

- der Schritt b) das Generieren, durch den Server, einer Einheit umfasst, umfassend die Elemente:

$$(\alpha(r_i + f_i(0, y_i)), \ldots, \alpha(r_i + f_i(q - 1, y_i)))$$

wobei $y_i$ eine Komponente des Vektors ist, den der Server besitzt, und
- die bei Schritt c) zurückgewonnene Übergangsangabe ist:

$$(\alpha(r_i + f_i(x_i, y_i))$$

11. Verfahren nach einem der Ansprüche 1 bis 5, wobei die zu evaluierende Funktion ein Produkt der n Unterfunktionen $f_i$ ist und die Durchführung jeder Schrittreihe umfasst:

- bei Schritt b) wird jedes Element durch das Produkt eines möglichen Ergebnisses der Unterfunktion $f_i$, evaluiert in der Angabe des Clients und der Angabe des Servers, und einer ersten Maskenangabe, und Potenzieren der zweiten Maskenangabe, gebildet,
- bei Schritt d) wird der erste Teil des Ergebnisses durch den Server durch Produkt aller ersten Maskendaten und Potenzieren mit der zweiten Maskenangabe generiert, und
- bei Schritt e) wird der zweite Teil des Ergebnisses durch den Client durch Produkt aller Übergangsdaten generiert.

12. Verfahren nach Anspruch 11, wobei die Komponenten der Daten, über die die Verarbeitungseinheiten verfügen, Ganzzahlen sind, die zwischen 0 und q-1 liegen, und:

- der Schritt b) das Generieren, durch den Server, einer Einheit umfasst, umfassend die Elemente:

$$((r_i \cdot f_i(0, y_i))^{\alpha}, \ldots, (r_i \cdot f_i(q - 1, y_i))^{\alpha})$$

wobei $y_i$ eine Komponente des Vektors ist, den der Server besitzt, und

- die bei Schritt c) zurückgewonnene Übergangsangabe ist:

$$\left(r_i \cdot f_i(x_i, y_i)\right)^\alpha$$

**13.** Rechnerprogrammprodukt, umfassend Codebefehle, die, ausgeführt von zwei Verarbeitungseinheiten, die zwei Entitäten zur Durchführung eines Verfahrens nach einem der vorangehenden Ansprüche veranlassen.

**14.** System zur Authentifizierung eines Individuums, umfassend eine erste Verarbeitungseinheit und eine zweite Verarbeitungseinheit, wobei jede Verarbeitungseinheit einen Prozessor (10) und eine Kommunikationsschnittstelle (12) umfasst,
wobei das System **dadurch gekennzeichnet ist, dass** die erste und die zweite Verarbeitungseinheit für die Durchführung des Datenverarbeitungsverfahrens nach einem der Ansprüche 8 oder 9 geeignet sind.

**Claims**

**1.** Method for executing a cryptographic calculation implemented by two processing units ($P_1, P_2$) each comprising processing means, and having respectively a vector A and a vector B comprising a number n of indexed components, the method comprising a secure evaluation of a function F obtained by applying to n sub-functions $f_i$ two variables of an operation referred to as first operation, with the vectors of each processing unit as inputs of the function, the method being **characterised in that** it comprises:

- implementing a series of steps ($100_1$) of secure calculation wherein a processing unit takes the role of a client and the other processing unit takes the role of a server, and
- repeating the series of steps ($100_2$) of secure calculation wherein the roles of client and of server are exchanged between the two processing units, with each series of steps (100) comprising:

a) the server randomly generating (110) n first masking data ($r_i$), in the set $\mathbb{Z}_m$ with m prime, reversible for the first operation, and second masking data ($\alpha$) in the set $\mathbb{Z}_m$ reversible for a second operation, different from the first operation, and distributive with respect to the latter,
b) for each sub-function $f_i$, the server generating (120) a set of elements, with each element formed by:

∘ a result of the sub-function $f_i$ evaluated as the vector of the server and as a possible value of a component of the vector possessed by the client,
∘ masked by a first masking data ($r_i$), with the masking being obtained by application of the first operation between the result and the first masking data, and
∘ masked by the second masking data ($\alpha$), the masking being implemented by application between the result masked by the first masking data and the second masking data of the second operation,

c) the client recovering via unconscious transfer (130), for each component of the vector possessed by the client, intermediate data corresponding to one of the elements generated by the server and indexed by the value of said component,
d) the server generating (140) a first part of the result (R), by:

• masking each first masking data ($r_i$) by applying the second operation between each first masking data ($r_i$) and the second masking data ($\alpha$), in such a way as to obtain first masked data, and
• applying between all said first masked data of the first operation, and

e) the client generating (150) a second part of the result (T), by applying between all the intermediate data of the first operation, said second part of the result corresponding to the masked evaluation of the function F with the vectors of the two processing units as inputs,

- the two processing units implementing a test of the equality (200) on the masked evaluations of the function F obtained at the end of each series of steps, without one of the processing units obtaining information on the result F(A,B), with the test of the equality (200) comprising the commitment scheme of the first and second parts of the result and of the second masking data of each series of steps and

- if the test of the equality is satisfied, the steps, carried out by one of the two processing units, of:

1) calculating (300) the function evaluated with the data of the two processing units F(A,B) from the first and second parts of the result, and
2) using the function evaluated with the data of the two processing units in at least one application among the group comprising a cryptographic application, an identification application, an authentication application.

2. Method according to claim 1, wherein implementing the two series of steps is carried out simultaneously.

3. Method according to one of the preceding claims, wherein the step of calculating (300) by one of the two processing units of F(A,B) comprises obtaining the part of the result held by the other processing unit, and the deducing of F(A,B) from the two parts of the result.

4. Method according to one of the preceding claims, wherein the steps of implementing and of repeating the series of steps are carried out once for the numerator of a fraction of functions and once for the denominator of the fraction of functions.

5. Method according to one of the preceding claims, wherein the first operation is an addition or a multiplication, and the second operation is respectively a multiplication or a raising to a power.

6. Method according to claim 5, wherein the function F is a sum of the n sub-functions $f_i$, and implementing each series of steps comprises:

- during step b), each element is formed by the sum of a possible result of the sub-function $f_i$ evaluated as the data of the client and the data of the server and of a first masking data, and multiplied by the second masking data,
- during step d), the first part of the result is generated by the server by summation of all the first masking data and multiplication by the second masking data, and
- during step e), the second part of the result is generated by the client by summation of all the intermediate data.

7. Method according to one of claims 5 or 6, wherein the function to be evaluated is one among the following group:

- Hamming distance between the vectors of the parts,
- the numerator or the denominator of a fraction of functions representing the standardised Hamming distance between the vectors of the parts,
- scalar product between the vectors of the parts.

8. Method according to claim 7, wherein the vectors of the processing units are identity data of individuals, and using the evaluated function comprises:

- comparing (400) with a pre-established threshold according to the nature of the function evaluated, and
- from the result of said comparison, determining (500) whether or not the identity data corresponds to the same individual.

9. Method according to claim 8, wherein the identity data of individuals is the data encoded on biometric traits of individuals.

10. Method according to one of claims 7 to 9, wherein the components of data held by the processing units are integers comprised between 0 and q-1, and:

- step b) comprises the server generating a set comprising the elements:

$$(\alpha(r_i + f_i(0, y_i)), \ldots, \alpha(r_i + f_i(q - 1, y_i)))$$

where $y_i$ is a component of the vector possessed by the server, and
- the intermediate data recovered during step c) is:

$$(\alpha(r_i + f_i(x_i, y_i)))$$

**11.** Method according to one of claims 1 to 5, wherein the function to be evaluated is a product of the n sub-functions $f_i$, and implementing each series of steps comprises:

- during step b), each element is formed by the product of a possible result of the sub-function $f_i$ evaluated as the data of the client and the data of the server and of a first masking data, and the raising to a power of the second masking data,
- during step d), the first part of the result is generated by the server as a product of all the first masking data and the raising to a power of the second masking data, and
- during step e), the second part of the result is generated by the client as a product of all the intermediate data.

**12.** Method according to claim 11, wherein the components of the data held by the processing units are integers comprised between 0 and q-1, and:

- step b) comprises the server generating a set comprising the elements:

$$((r_i \cdot f_i(0, y_i))^\alpha, \ldots, (r_i \cdot f_i(q - 1, y_i))^\alpha)$$

where $y_i$ is a component of the vector possessed by the server, and
- the intermediate data recovered during step c) is:

$$(r_i \cdot f_i(x_i, y_i))^\alpha$$

**13.** Computer program product, comprising code instructions which, executed by two processing units, lead the two entities to implement a method according to one of the preceding claims.

**14.** System for authenticating an individual, comprising a first processing unit and a second processing unit, with each processing unit comprising a processors (10) and a communication interface (12), the system being **characterised in that** the first and the second processing unit are suitable for implementing the method for processing data according to one of claims 8 or 9.

**P₁**

**P₂**

A=(a$_1$,...,a$_n$)

B=(b$_1$,...,b$_n$)

**P₁ = Client**

**P₂ = Serveur**

$$\forall i \in [1,n], r_{i,1} \in {}_R\mathbb{Z}_m, \alpha_1 \in {}_R\mathbb{Z}_m^*$$

$\forall i \in [1,n]$, OT

$a_i$ $\longleftrightarrow$ $(\alpha_1(r_{i_1} + f_i(0,B)), \alpha_1(r_{i_1} + f_i(1,B)))$

$100_1$

$$t_{i,1} = \alpha_1(r_{i_1} + f_i(a_i,B))$$

$$T_1 = \sum_{i=1}^{n} t_{i,1} = R_1 + \alpha_1 F_1(A,B)$$

$$R_{1,} = \alpha_1 \sum_i r_{i,1}$$

**P₁ = Serveur**

**P₂ = Client**

$$\forall i \in [1,n], r_{i,2} \in {}_R\mathbb{Z}_m,$$
$$\alpha_2 \in {}_R\mathbb{Z}_m^*$$

$\forall i \in [1,n]$, OT

$100_2$

$(\alpha_2(r_{i_2} + f_i(0,A)), \alpha_2(r_{i_2} + f_i(1,A)))$ $\longleftrightarrow$ $b_i$

$$R_2 = \alpha_2 \sum_i r_{i,2}$$

$$t_{i,2} = \alpha_2(r_{i_2} + f_i(b_i,A))$$

$$T_2 = \sum_{i=1}^{n} t_{i,2} = R_2 + \alpha_2 F_2(A,B)$$

# FIG. 1a

$P_1$

$A=(a_1,...,a_n)$

$P_1$ = Client

$\forall i \in [1,n]$, OT

$100_1$

$a_i$

$t_{i,1} = \left( \left( r_{i_1} \cdot f_i(a_i, B) \right) \right)^{\alpha_1}$

$T_1 = \prod_{i=1}^{n} t_{i,1} = R_1 F_1(A, B)^{\alpha_1}$

$P_2$

$B=(b_1,...,b_n)$

$P_2$ = Serveur

$\forall i \in [1,n], r_{i,1} \in {}_R \mathbb{Z}_m^*, \alpha_1 \in {}_R \mathbb{Z}_m^*$

$\left( \left( r_{i_1} \cdot f_i(0, B) \right)^{\alpha_1}, (r_{i_1} \cdot f_i(1, B)^{\alpha_1}) \right)$

$R_1 = \left( \prod_i r_{i,1} \right)^{\alpha_1}$

$P_1$ = Serveur

$\forall i \in [1,n], r_{i,2} \in {}_R \mathbb{Z}_m^*,$
$\alpha_2 \in {}_R \mathbb{Z}_m^*$

$\left( \left( r_{i_2} \cdot f_i(0, B) \right)^{\alpha_2}, (r_{i_2} \cdot f_i(1, B)^{\alpha_2}) \right)$

$100_2$

$\forall i \in [1,n]$, OT

$P_2$ = Client

$b_i$

$R_2 = \left( \prod_i r_{i,2} \right)^{\alpha_2}$

$t_{i,2} = \left( \left( r_{i_2} \cdot f_i(b_i, A) \right) \right)^{\alpha_2}$

$T_2 = \prod_{i=1}^{n} t_{i,2} = R_2 F_2(A, B)^{\alpha_2}$

## FIG. 1b

**P₁**

$T_1, R_2, \alpha_2$

Clés aléatoires $K_1, K_2, K_3$

$c_1 = Com(T_1, K_1)$
$c_2 = Com(R_2, K_2)$
$c_3 = Com(\alpha_2, K_3)$

210

**P₂**

$R_1, T_2, \alpha_1$

Clés aléatoires $K_4, K_5, K_6$

$c_1, c_2, c_3$

$c_4 = Com(R_1, K_4)$
$c_5 = Com(T_2, K_5)$
$c_6 = Com(\alpha_1, K_6)$

$c_4, c_5, c_6$

$R_2, K_2$

Si *Decom* $(c_2, K_2) \neq R_2$, STOP

$R_1, K_4$

*Si Decom($c_4$, $K_4$)≠$R_1$, STOP*

220

Calcul de $\alpha_2(T_1 - R_1)$
Et $H_1 = Hash(\alpha_2(T_1 - R_1))$

Calcul de $\alpha_1(T_2 - R_2)$
Et $H_2 = Hash(\alpha_1(T_2 - R_2))$

$H_1$

Si $H_1 \neq H_2$, STOP

$\alpha_1(T_2 - R_2)$

Si $\alpha_2(T_1 - R_1) \neq \alpha_1(T_2 - R_2)$, STOP

# FIG. 2a

**P$_1$**

**P$_2$**

T$_1$, R$_2$, α$_2$

R$_1$, T$_2$, α$_1$

Clés aléatoires K$_1$, K$_2$, K$_3$

Clés aléatoires K$_4$, K$_5$, K$_6$

c$_1$=*Com*(T$_1$, K$_1$)
c$_2$=*Com*(R$_2$, K$_2$)
c$_3$=*Com*(α$_2$,K$_3$)

$c_1, c_2, c_3$ →

210

$c_4, c_5, c_6$ ←

c$_4$=*Com*(R$_1$, K$_4$)
c$_5$=*Com*(T$_2$,K$_5$)
c$_6$=*Com*(α$_1$,K$_6$)

$R_2, K_2$ →

Si *Decom* (c$_2$,K$_2$)≠R$_2$, STOP

*Si Decom(c$_4$, K$_4$)≠R$_1$, STOP* ← $R_1, K_4$

Calcul de $(T_1 R_1^{-1})^{\alpha_2}$
Et H'$_1$=*Hash*$((T_1 R_1^{-1})^{\alpha_2})$

Calcul de par $(T_2 R_2^{-1})^{\alpha_1}$
Et H'$_2$=*Hash*$((T_2 R_2^{-1})^{\alpha_1})$

220

$H'1$ →

Si H'$_1$≠H'$_2$, STOP

Si $(T_1 R_1^{-1})^{\alpha_2} \neq (T_2 R_2^{-1})^{\alpha_1}$, STOP ← $(T_2 R_2^{-1})^{\alpha_1}$

## FIG. 2b

100

$100_1$

| $P_1$ = Client , $P_2$= Serveur | $P_2$ =Client , $P_1$= Serveur |
|---|---|
| $110_1$   Génération aléatoire données $r_{i1}$, $\alpha_1$ | Génération aléatoire données $r_{i2}$, $\alpha_2$   $110_2$ |
| $120_1$   Éléments masqués | Eléments masqués   $120_2$ |
| $130_1$   Transfert inconscient | Transfert inconscient   $130_2$ |
| $140_1$   Génération $R_1$ | Génération $R_2$   $140_2$ |
| $150_1$   Génération $T_1$ | Génération $T_2$   $150_2$ |

$100_2$

Test d'égalité

200

210   Mise en gage

220   Vérification égalité

230   Calcul du résultat

# FIG. 3a

100

$100_1$

$110_1$

$120_1$

$130_1$

$140_1$

$150_1$

Client = $P_1$, Serveur = $P_2$

Génération aléatoire
données $r_{i1}$, $\alpha_1$

Génération $\alpha_1(r_{i1}+f_{i1}(0,Y)$,
$\alpha_1(r_{i1}+f_{i1}(1,Y))$

Transfert inconscient

Somme $1^{\text{ères}}$ données

Somme données
intermédiaires

Client = $P_2$, Serveur = $P_1$

Génération aléatoire
données $r_{i2}$, $\alpha_2$

Génération $\alpha_2(r_{i2}+f_{i2}(0,Y)$,
$\alpha_2(r_{i2}+f_{i2}(1,Y))$

Transfert inconscient

Somme $1^{\text{ères}}$ données

Somme données
intermédiaires

$100_2$

$110_2$

$120_2$

$130_2$

$140_2$

$150_2$

200

Test d'égalité

300

Calcul du résultat

400

Comparaison à un seuil

500

Authentification

# FIG. 3b

**FIG. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2992124

**Littérature non-brevet citée dans la description**

- **NAOR et al.** Efficient oblivious transfer protocols. *Proceedings of the Twelfth Annual Symposium on Discrete Algorithms,* 07 Janvier 2001, 448-457
- **ASHAROV et al.** More efficient oblivious transfer and extensions for faster secure computation. *2013 ACM SIGSAC Conference on Computer and Communications Security,* 04 Novembre 2013, 535-548

- **J. BRINGER et al.** GSHADE : Faster Privacy-Preserving Distance Computation and Biometric Identification. *In Proceedings of the 2nd ACM workshop on Information hiding and multipedia security,* 2014, 187-198
- **ASHAROV et al.** More efficient oblivious transfer extensions with security for malicious adversaries. *Advances in Cryptology - EUROCRYPT 2015 - 34th Annual International Conference on the Theory and Applications of Cryptographie Techniques, Sofia, Bulgaria, April 26-30 2015, Proceedings,* 26 Avril 2015, 673-701